# EUROPEAN PATENT APPLICATION

(11) **EP 4 183 569 A1**
(43) Date of publication of application: **24.05.2023**
(21) Application number: 22208276.0
(22) Date of filing: 18.11.2022
(51) Int. Cl.: B32B 5/02, B32B 5/06, B32B 5/08, B32B 5/26, B32B 7/02, C04B 35/52, C04B 35/83, F16D 65/12, F16D 69/02, B29B 11/16, D04H 1/4242, D04H 1/498

(54) **METHOD FOR MAKING A FIBROUS PREFORM OF CARBON AND/OR FIBRES OF A CARBON PRECURSOR OF PRE-SET HEIGHT AND PREFORM DIRECTLY FORMED**

(30) Priority: 23.11.2021 IT 202100029546
(71) Applicant: Brembo SGL Carbon Ceramic Brakes S.p.A., 24040 Stezzano (BG) (IT)
(72) Inventor: ORLANDI, Marco, 20831 Seregno (MB) (IT); CARNEVALI, Guido, 21057 Olgiate Olona (VA) (IT); MARSCHALL, Michael, 86633 Neuburg an der Donau (DE)
(74) Representative: Fabiano, Piero

(57) **Abstract**

Method for making a fibrous preform (1) of carbon and/or fibres of a carbon precursor of pre-set height (N), comprising:
- a step a) of providing at least one first disk-shaped layer (3') made of carbon fibres and/or fibres of a carbon precursor comprising a plurality of long fibres (21) arranged substantially according to a first extension direction identified by an extension axis (X);
- a step b) of superimposing a second disk-shaped layer (3") of carbon fibres and/or fibres of a carbon precursor according to a pre-set superimposition axis (Z) comprising a plurality of long fibres (21) arranged substantially according to a second extension direction identified by an extension axis (Y); said superimposing step b) is implemented so that there is an angular deviation α > 0 between said first extension direction and said second extension direction;
- a step c) of needle-felting, by at least one needle-felting device (10), said first (3') and said second (3") superimposed layers in a needle-felting direction substantially parallel to said superimposition axis (Z) to arrange at least part of the fibres parallel to the superimposition axis (Z),
- a step d) of repeating steps b-c until a needle-punched multilayer body (2') of pre-set height (N) is formed.

## Description

### Field of the invention

The present invention refers to a method for making a fibrous preform for brake discs and the fibrous preform directly formed.

### Known art

The following documents describe some examples of methods for making a preform or shaped materials for brake discs: WO2019180550 and WO2016/199021.

### Summary of the invention

As is known, in the aeronautical field and in the field of racing cars, braking systems are made using carbon/carbon (C/C) components, in particular rotors/stators and disc brakes.

Carbon/carbon components consist of a carbon matrix in which carbon reinforcement fibres are arranged.

Typically, carbon fibre or carbon precursor is aggregated (alone or by using binders, e.g. resins) to form a three-dimensional structure referred to as "preform".

The most used carbon precursors are PAN, pitch and rayon.

The carbonaceous matrix can be formed in various ways, essentially falling into two categories: by resin and/or pitch impregnation of the fibrous structure or by gas (CVI, "Chemical Vapour Impregnation" or "Chemical Vapour Infiltration").

The presence of additives added in specific steps of the production process can be provided in order to improve the intermediate manufacturability or the characteristics of the final product, such as coefficient of friction and/or wear resistance.

Among the various methods for the production of preforms of carbon fibres, the following can be mentioned:
- impregnation and/or moulding of short fibres (chop) with resins;
- impregnation and/or moulding of woven or non-woven felts with resins;
- needle-felting of non-woven felts, possibly enriched with continuous fibres;
- needle-felting of short fibres (chop);
- needle-felting of carbonaceous fabrics or carbon precursors;
- sewing of fabrics.

As is well known, some of the crucial characteristics of the finished brake disc formed from a carbon fibre preform, depend heavily on the way the preform is made.

In particular, characteristics such as compressive strength/stiffness along the disc's axis of rotation Z (orthogonal to the disc plane), shear strength with respect to the disc plane and thermal conductivity along the axis Z are strongly dependent on the quantity and distribution of fibres directed along the axis Z. At the same time, the quantity, fibre distribution and number of layers on the disc plane strongly influence final characteristics such as bending strength and thermal conductivity on the disc plane and thickness.

The Applicant has noticed that, normally, production methods based on impregnation/moulding involve the almost total absence of fibres along the axis Z, resulting in very poor values of the characteristics described above.

Typically, these production methods are adopted for their low cost and ease of production, but the technical and qualitative end result is definitely poor.

The Applicant has also noticed that alternative production methods, such as sewing, involve a limited presence of fibres along the axis Z, which, moreover, are not very evenly distributed.

The Applicant has also noticed that methods, such as needle-felting, allow the fibres to be distributed more effectively on the axis Z instead.

The Applicant has noticed that the known needle-felting methods have a limited possibility of orientation of the long fibres in planes orthogonal to the axis Z, this limitation results in a limited possibility of optimising the mechanical characteristics of the preform through the control of this parameter.

To date, therefore, there is no method in the known art for the manufacture of preforms of carbon fibres that allows to optimise the distribution of the long fibres on the main plane of the preform depending on the mechanical characteristics, and particularly the strength, intended to be achieved on the same preform.

Therefore, the Applicant has raised the problem of making a preform and a method for the manufacture of preforms of carbon fibres and/or fibres of a carbon precursor, which has a controlled orientation of the long fibres in the main plane of the preform.

In a first aspect, the invention thus refers to a method for making a fibrous preform of a pre-set height of carbon and/or fibres of a carbon precursor, comprising:
- a step a) of providing at least one first disk-shaped layer of carbon fibres and/or fibres of a carbon precursor comprising a plurality of long fibres arranged substantially according to a first extension direction identified by an extension axis;
- a step b) of superimposing a second disk-shaped layer of carbon fibres and/or fibres of a carbon precursor according to a pre-set superimposition axis comprising a plurality of long fibres arranged substantially according to a second extension direction identified by an extension direction; said superimposing step is implemented so that there is an angular deviation α > 0 between said first extension direction and said second extension direction;
- a step c) of needle-felting, by at least one needle-felting device, said first and said second superimposed layers in a needle-felting direction substantially parallel to said superimposition axis to arrange at least part of the fibres parallel to the superimposition axis;
- a step d) of repeating steps b,c until a needle-punched multilayer body of pre-set height N is formed.

Thanks to these characteristics, the Applicant has verified that the preform made with the method of the invention has a controlled distribution of long fibres in the main plane of the preform, i.e. a plane orthogonal to the superimposition axis, so as to be able to control the mechanical characteristics and, in particular, to increase the mechanical strength of the same preform.

For the purposes of the present invention, the following definitions apply:
"Woven sub-layer" means a layer of material having an ordered arrangement of the fibres, wherein the fibres are all arranged substantially on the same plane.
"Non-woven sub-layer" means a layer of material mainly consisting of short fibres arranged randomly.
"Short fibre" means a fibre of a pre-set/discrete length.
"Long fibre" means a fibre of a pre-set/discrete length, typically a long fibre has a length of at least 200 mm measured along its extension.

In this description, unless otherwise specified, the terms "radial", "axial", "angular" and "circumferential" will always be understood with respect to the direction of construction of the multilayer body identified by the axis Z.

The present invention, in one or more preferential aspects, can comprise one or more of the characteristics set forth below.

Conveniently, step b) is implemented so that the second layer is arranged so that its long fibres have an angular offset of at least 15° with respect to the long fibres of the second layer.

Preferably, said step a) comprises a sub-step a') of depositing at least said first layer on a supporting element which can be translated and is configured to be placed under said first needle-felting head, the movement of said supporting element to bring said first layer under said first needle-felting head, by identifying a feeding direction.

Preferably, in said sub-step a'), the first layer is placed on said supporting element so that its long fibres are arranged orthogonally to the feeding direction.

Conveniently, at least the first and second layers of carbon fibres and/or fibres of a carbon precursor each comprise at least one first non-woven sub-layer and at least one second sub-layer which are coupled so that the first non-woven sub-layer is superimposed on the second sub-layer.

Advantageously, the second sub-layer comprises a plurality of unidirectional long fibres having an extension direction identified by an extension axis.

Preferably, the first non-woven sub-layers have an area weight lower than the area weight of the second sub-layers.

Conveniently, the method comprises a step e) of determining the number n of layers of carbon fibres and/or fibres of a carbon precursor according to a pre-set superimposition axis so as to form a first multilayer body of pre-set height.

Conveniently, the number of fibres arranged by needle-felting during step c and/or parallel to the needle-felting direction is selected depending on the density of the fibres intended to be obtained within the fibrous preform arranged parallel to the superimposition axis.

Preferably, at the needle-felting step c), the average number of fibres to be arranged parallel to said superimposition axis per unit area is controlled by adjusting the needle-felting density depending on the dimension and number of barbs of the needles, as well as the diameter of the fibres.

Conveniently, the method may comprise a step f) of shaping the fibrous preform performed by die cutting said first multilayer body.

Preferably, in order to reduce problems or structural weakening in the preform, at least the first and second layers of carbon fibres and/or fibres of a carbon precursor are made, in plan, of a single piece.

In other words, the layers of carbon fibres and/or fibres of a carbon precursor forming the preform do not have any joining portions or seams.

According to another aspect, the present invention concerns a fibrous preform of a pre-set height of carbon and/or fibres of a carbon precursor, comprising a plurality of superimposed disk-shaped layers of carbon fibres and/or fibres of a carbon precursor, each layer comprising a plurality of long fibres of carbon and/or carbon precursor which are arranged according to an extension direction, at least two layers of the same fibrous preform being arranged, with respect to each other, with the long fibres mutually rotated by a pre-set angle around the aforesaid superimposition axis.

Conveniently, each layer comprises at least one first non-woven sub-layer and at least one second sub-layer which are coupled so that the first non-woven sub-layer is superimposed on the second sub-layer.

Preferably, the second sub-layer comprises a plurality of unidirectional long fibres having an extension direction identified by an extension axis.

Advantageously, at least two layers of the same fibrous preform are arranged with respect to each other with the long fibres mutually rotated by a pre-set angle α greater than or equal to 15° around the superimposition axis Z.

Advantageously, at least two layers of the same fibrous preform are made, in plan, of a single piece.

Further characteristics and advantages of the invention will become more apparent from the detailed description of some preferred, but not exclusive, embodiments of a method for making a fibrous preform of pre-set height of carbon and/or fibres of a carbon precursor according to the present invention.

### Brief description of the drawings

Such description will be set forth hereinafter with reference to the appended drawings provided for indicative, and therefore non-limiting, purpose only, wherein:
- Figure 1 shows a schematic perspective view, partially sectioned, of a preform according to the invention;
- Figure 2 is a sectional view of the preform of figure 1;
- Figure 3 is a schematic view of some steps of the method for making a fibrous preform of pre-set height according to the invention;
- Figure 4 is a schematic view of the arrangement of the fibres as following the interaction of the needles of a needle-felting device with a non-woven sub-layer during a step of making the same preform; and
- Figure 5 is a schematic view of a first embodiment of a needle for needle-felting, with two subsequent enlargements depicting the barbs of the same needle.

### Detailed description of embodiments of the invention

With reference to the accompanying figures, 1 generally denotes a fibrous preform 1 formed by the method according to the present invention.

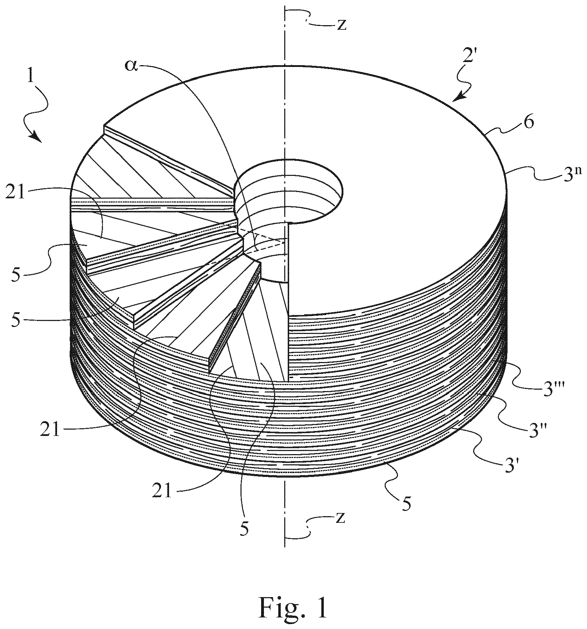

In particular, figure 1 schematically shows a preform 1 made by the method according to the present invention.

The preform 1, at the end of the production method, consists of a multilayer body 2' comprising a plurality of layers 3',3",..,3ⁿ superimposed on each other to form a stack extending along a superimposition axis Z, e.g. vertical as shown in figure 1.

Preferably, each multilayer body 2' is made of n layers 3',3",....,3ⁿ, preferably identical in shape and dimension.

Each layer 3',3",..,3ⁿ, is disk-shaped.

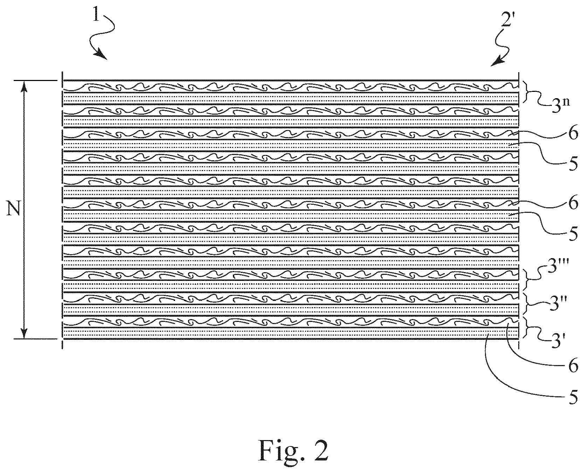

The preform 1 of figures 1 and 2 comprises a plurality of layers 3',3",..,3ⁿ, preferably n layers, of carbon fibres or precursor of carbon fibres, these n layers being stacked along the direction identified by the superimposition axis Z. Advantageously, a fibrous preform 1, according to the present invention, can be used when making C/C brake discs as reinforcing structure.

In this case, the fibrous preform 1 is shaped so as to have cylindrical shape, with axis parallel to the superimposition axis Z of the plurality of layers 3',3",..,3ⁿ, of carbon fibres or precursor of carbon fibres.

In particular, the fibrous preform 1 may have a thickness between 10 and 80 mm.

In particular, the fibrous preform 1 may have circular section according to a plane orthogonal to the superimposition axis Z and may have a diameter between 200 and 700 mm.

In particular, the fibrous preform has a (geometric apparent) density between 0.4 and 0.7 g/cm³.

Merely by way of example, at least one part of the carbon fibres (preferably all these fibres) can be derived from oxidised polyacrylonitrile fibres. For example, such fibres are produced by the company SGL Carbon SE under the trade name Panox^{®}.

Preferably, the number of layers 3',3",....,3ⁿ of carbon fibres or precursor of carbon fibres forming a finished fibrous preform 1 of height N is in the range 10-80, advantageously 25-45, e.g. 30-40.

Merely by way of example, along the direction identified by the superimposition axis Z, the fibrous preform 1 may have a thickness between about 40-80 millimetres or more, precisely equal to about 40 millimetres.

Advantageously, at least two, preferably all, layers of the same fibrous preform are made, in plan, of a single piece.

In other words, each layer 3',3",....,3ⁿ composing the fibrous preform 1 is provided, in plan, of a single piece and is, therefore, not assembled by sewing or any other joining method that could involve structural weakening in the preform.

Preferably, each layer 3',3",..,3ⁿ composing the fibrous preform 1 is composed of two different coupled sub-layers 5,6. Each sub-layer 5 or 6 is made of a single piece.

In particular, according to a particularly advantageous embodiment, each layer 3',3",....,3ⁿ comprises one or more sub-layers 6 of fibres in non-woven form.

The non-woven sub-layers 6 comprise short fibres and may be formed by any technique adapted for the purpose. Preferably, such sub-layers are formed starting from staple fibres.

Alternatively, at least part or all of the non-woven sub-layers 6 may consist of fibres in the form of continuous filaments.

Preferably, each layer 3',3",....,3ⁿ further comprises one or more sub-layers 5 of long fibres 21 arranged according to an extension direction and substantially on the same plane.

Preferably, the long fibres 21 of the same layer 3',3",..,3ⁿ are unidirectional fibres, i.e. they all lie substantially in the same plane and all have the same extension direction.

Alternatively, the long fibres 21 can be arranged in a fabric, in which case hereinafter the sub-layers 5 will be referred to as woven sub-layers 5.

The woven sub-layers 5 are sub-layers of material having an ordered arrangement of fibres, wherein the fibres are all arranged substantially on the same plane.

Each woven sub-layer 5 has a weave extension parallel to the surface extension plane of the same sub-layer. In particular, the woven sub-layers 5 may have a twill weave or a plain weave.

The woven sub-layers 5 in a fibrous preform 1 may all have the same type of weave or they may have different types of weave.

The (woven, unidirectional or non-woven) sub-layers 5,6 of fibres may consist of fibres having the same characteristics or of mixtures of different fibres. The fibres may vary in type and characteristics both within the same sub-layer 5 or 6 and between sub-layer and sub-layer.

Preferably, non-woven sub-layers 6 have an area weight lower than the area weight of the sub-layers 5.

In particular, the non-woven sub-layers 6 each have an area weight between 50 and 500 g/m². The sub-layers 5 each have an area weight between 100 and 1000 g/m².

Advantageously, at least two of the sub-layers 5 of the various layers 3',3",3‴ ....3ⁿ, of the same preform 1, can be arranged with respect to each other with the long fibres mutually rotated by a pre-set angle α around the aforesaid superimposition axis Z.

Preferably, all sub-layers 5 of the various layers 3',3",3‴....3ⁿ, of the same preform 1, can be arranged with respect to each other with the long fibres 21 mutually rotated by a pre-set angle α around the aforesaid superimposition axis Z.

Preferably, each layer 3',3",3‴....3ⁿ of the same preform 1 may have its own long fibres 21 all arranged with an angular offset greater than or equal to 15° with respect to the long fibres 21 of the adjacent layers 3',3",3‴....3ⁿ according to the superimposition direction Z.

In the same preform, the long fibres 21 of each layer 3',3",3‴....3ⁿ may have an orientation different from those of the remaining layers 3',3",3‴....3ⁿ.

In the case of woven sub-layers 5, the weave of a woven sub-layer 5 may have an angular offset around the superimposition axis Z of a pre-set angle α, with respect to the subsequent sub-layers in a direction coinciding with or parallel to the superimposition axis Z.

In the case of woven sub-layers 5, it is the long fibres 21 making the weave that are rotated by a pre-set angle α around the aforesaid superimposition axis Z.

In other words, the texture of a woven sub-layer 5 may have an angular offset around the superimposition axis Z of a pre-set angle α, with respect to subsequent sub-layers in a direction coinciding with or parallel to the superimposition axis Z.

Advantageously, by having the woven sub-layers 5 of the various layers 3',3",3‴....3ⁿ, of the same preform 1, arranged with respect to each other with the long fibres 21 respectively rotated by a pre-set angle α about the aforesaid superimposition axis Z, it follows that the same layers 3',3",3‴....3ⁿ also have the same angular offset α around the aforesaid superimposition axis Z. The angular offset of two subsequent layers 3',3",3‴....3ⁿ according to the direction Z is identified by the angular offset of the long fibres 21 of the sub-layers contained therein.

Thanks to the aforesaid orientation, it is possible to maximise the distribution of the fibres on the main plane of the preform 1 and thus the final mechanical properties of the manufactured articles (in particular brake discs) incorporating the fibrous preform 1 as a reinforcing structure.

A preform 1, such as the one described above, can be made by the method according to an aspect of the invention.

The method, according to an aspect of the invention, provides for a step (hereinafter referred to as step e) of determining the number n of layers of carbon fibres and/or fibres of a carbon precursor according to a superimposition axis Z so as to form a fibrous preform 1 of height N.

In particular, at this step, depending on the brake disc intended to be produced, the height N or thickness of the fibrous preform 1 to be made is determined and, depending on this height N, the number n required of layers of fibres of carbon and/or fibres of a carbon precursor is obtained.

The thickness of the n layers of carbon fibres and/or fibres of a carbon precursor 1 is assumed to be substantially always the same.

Merely by way of example, starting from the brake disc intended to be made in particular having a given thickness, I determine a blank disc to be machined, from the dimension of the blank disc, knowing that it will be subjected to at least one thermal treatment and at least one densification operation, I determine the height of the fibrous preform 1.

By way of example, in order to make a 43mm carbon fibrous preform 1, a 50mm preoxidised carbon preform (in order to switch from preoxidised carbon to carbon, there is a carbonisation thermal treatment with a shrinkage of about 12%) might be needed. Therefore, in order to get 43 mm, I would have to start from 50 mm. Each layer 3',3",..,3ⁿ (depending on its starting density and stitch density) could have a thickness in the preform of about 1.5 mm, therefore, in order to make a 43mm carbon fibrous preform 1, about 33-34 layers 3',3",....,3ⁿ might be needed.

Step e) is carried out at any time, preferably also temporally distant from the production of the fibrous preform 1.

Generally, step e) is implemented prior to steps a)-d) of the method for making a fibrous preform 1 of a pre-set height N of carbon and/or fibres of a carbon precursor described below.

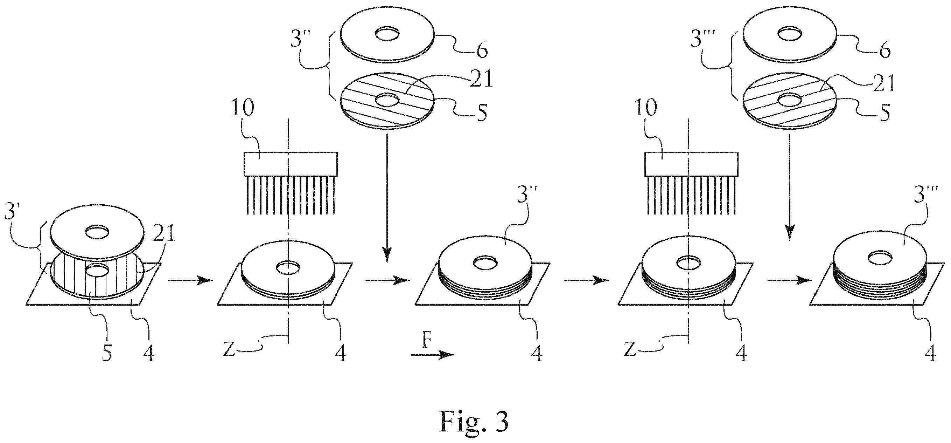

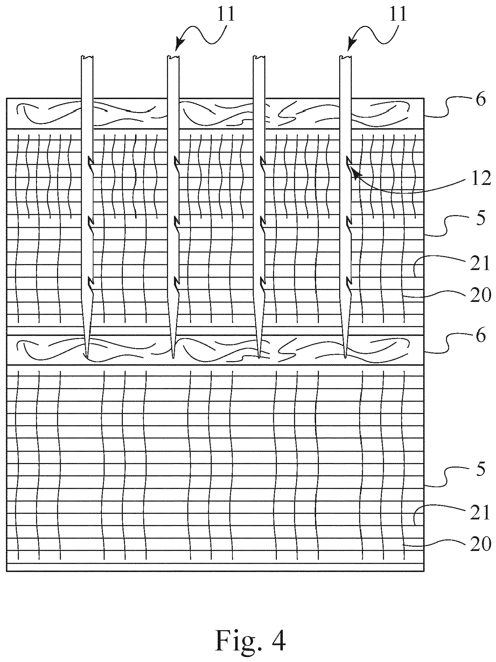

Figures 3 and 4 schematically show some steps of a first embodiment of the method for making a fibrous preform 1 of pre-set height N according to the invention.

The production method depicted in figure 3 therefore preferably starts with a step a) of providing at least one first disk-shaped layer 3' of carbon fibres and/or fibres of a carbon precursor.

The first layer 3' comprises a plurality of long fibres 21 of carbon fibres and/or fibres of a carbon precursor arranged substantially in the same plane referred to as the main plane of the preform.

The long fibres 21 are preferably all parallel to each other and arranged substantially according to an extension direction identified by an extension direction Y.

Step a further comprises a sub-step a') wherein the first layer 3' is arranged on top of a movable, preferably translatable, supporting element 4 configured to carry the layers 3',3",....,3ⁿ, etc. of carbon fibres and/or fibres of a carbon precursor under the needle-felting device 10.

The movement of said supporting element 4 for bringing the first layer 3', and subsequently the remaining layers, under the needle-felting device identifies a feeding direction depicted by the arrow F in figure 3.

Preferably, the first layer 3' is placed on the supporting element 4 so that its long fibres 21 are arranged orthogonally to the feeding direction.

Preferably, the movable supporting element 4 is formed from the same material of which the layers 3',3"....,3ⁿ, etc. are composed.

According to an embodiment, the supporting element 4 has an area, i.e. a surface extension, greater than the area of each layer 3',3"..,3ⁿ, etc.

Preferably, the dimension of the supporting element parallel to the feeding direction F of the layers 3',3",....,3ⁿ, etc. is greater than the diameter of each layer 3',3",....,3ⁿ, etc.

Preferably, the dimension of the supporting element 4 parallel to the feeding direction of the layers 3',3",....,3ⁿ, etc. is at least 10% greater than the diameter of each layer 3',3",....,3ⁿ, etc.

Step b) is then implemented, in which the first layer 3' of carbon fibres and/or fibres of a carbon precursor is superimposed by at least one second disk-shaped layer 3" of carbon fibres and/or fibres of a carbon precursor according to a pre-set superimposition axis Z.

The shape of the second disk-shaped layer 3" is substantially identical to that of the first layer 3".

Preferably, as will become clearer below, the shapes of the subsequent layers superimposed to form the multilayer body 2' will also be substantially identical to those of the first 3' and second 3" layers.

Preferably, the first 3' and second 3" layers of carbon fibres and/or fibres of a carbon precursor are also substantially equal in size and material.

In step b), the second disk-shaped layer 3" comprising a plurality of long fibres 21 which are arranged substantially according to an extension direction identified by an axis Y is superimposed on the first layer 3" according to a pre-set superimposition axis Z and so that there is an angular deviation α > 0 between the first extension direction X of the long fibres 21 of the first layer 3' and the second extension direction Y.

Preferably, the angular deviation α is measured clockwise starting from the first extension direction X of the long fibres 21 of the first layer 3'.

This way, the long fibres 21 of the two layers have different orientation.

Preferably, step b is implemented so that the second layer 3" is arranged in a way that the second direction Y of its long fibres 21 has an angular offset of at least 15° with respect to the first direction X of the long fibres 21 of said first layer 3'.

In the embodiment shown in the figures, the first 3' and second 3" layers and each of the subsequently superimposed layers are formed by two different coupled sub-layers 5,6.

In particular, still with reference to the embodiment shown in the figures, the first 3' and second 3" layers and each of the subsequently superimposed layers are formed by one or more sub-layers 6 of fibres in non-woven form and one or more sub-layers 5 comprising long fibres 21.

The non-woven sub-layers 6 comprise short fibres and may be formed by any technique adapted for the purpose.

Preferably, such sub-layers 6 are formed starting from staple fibres.

On the other hand, the sub-layers 5 comprise unidirectional long fibres 21, i.e. all lying substantially in the same plane and all having the same extension direction in the same sub-layer.

The method then continues with a step c) of needle-felting, by means of at least one first needle-felting device 10 with needles, the first 3' and second 3" layers superimposed according to a needle-felting direction substantially parallel to the superimposition axis Z, so as to arrange at least one part of the fibres parallel to the superimposition axis Z.

The expression "arrangement parallel to the construction axis Z'" means a prevalent orientation and is not intended to be limited to arrangements in which the fibres are perfectly parallel to this axis.

In the aforesaid needle-felting step c), it is the first non-woven sub-layer 6 of each layer 3',3" to meet the needles 11 of the first needle-felting device 10 so as to prevent the needles 11 from directly engaging the fibres of the underlying sub-layers 5.

The fibres 20 that are to be arranged parallel to the aforesaid superimposition axis Z therefore belong to the sub-layers 6 of fibres in the non-woven form.

Figure 4 shows schematically the arrangement of fibres following the interaction of the needles 11 of a needle-felting device 10 with one or more non-woven sub-layers 6 and one or more sub-layers 5.

More in detail, 20 denotes the fibres that originate from a non-woven layer and have been displaced into the underlying woven sub-layers 5 by needle-felting.

21 schematically denotes the fibres forming the woven sub-layers 5.

Advantageously, the sub-layers 5,6 of fibres used to make the fibrous preform 1, in accordance with the method according to the present invention, are not covered by sizing to:
- avoid obstructing the needle-felting (in the presence of resin, the needles 11 of the first needle-felting device 10 would tend to become dirty and there would be a high risk of frequent system blockages); and
- not limit the "mobility" of the fibres 20.

Once step c) has been completed, steps b) and c) are repeated for a pre-set number of times, until a needle-punched multilayer pre-body 2' is formed with a height equal to the pre-set height N.

For the purposes of the present description, the repetition of steps b and c, for a pre-set number of times, until a needle-punched multilayer pre-body 2' equal to the pre-set height N is formed, identifies step d).

During step d) each further superimposed layer 3", ..3ⁿ has the same disk-shaped shape and the same dimension as the layers 3' or 3".

Each further superimposed layer 3‴,....3ⁿ comprises long fibres 21 preferably contained in a sub-layer 5 coupled to a sub-layer 6 comprising short fibres 20.

During step d), each further layer 3‴,....3ⁿ is superimposed on the previously deposited one, so that its long fibres 21 have an angular offset with respect to the long fibres 21 of the newly deposited layer.

Preferably, during step d), each further layer 3‴,....3ⁿ is superimposed on the preceding one, so that its long fibres 21 have an angular offset of at least 15° with respect to the long fibres 21 of the newly deposited layer.

Preferably, the offset between each layer 3',3",....,3^{n,} etc. and the one directly underlying it, i.e. the one just previously deposited, is measured clockwise.

At the end of the process, the multilayer body 2' of height N may have all layers 3',3",....,3ⁿ with a different orientation of the long fibres 21 or two or more layers with the same orientation of the long fibres 21.

The multilayer body 2 is typically subjected to further processing in order to form a brake disc.

By way of example, shaping, carbonisation and graphitisation, are described below.

Advantageously, the method according to the present invention may comprise a shaping step f) performed by cutting out the sub-layers 5,6 of carbon fibres and/or fibres of a carbon precursor, the single layers or the superimposed and needle-punched layers to form a multi-layer body. The shaping step could be implemented with a plotter-guided blade, by die cutting or other methods known to the person skilled in the art and, therefore, not further described.

As already mentioned, the fibres may be of carbon or a carbon precursor (preferably PAN, pitch or rayon).

Thanks to the method according to the present invention, it is possible to make a fibrous preform 1 by controlling the three-dimensional distribution of the fibres therein and, in particular, by arranging the long fibres 21 of each layer in a controlled manner, preferably mutually offset angularly in order to optimise the mechanical characteristics of the same preform.

In fact, the arrangement of the fibres on the planes defined by the sub-layers 5 (parallel to each other) can be controlled by appropriately choosing the type of fabric and the arrangement of each layer 3',3",....,3^{n,} etc. angularly with respect to the underlying layer 3',3",....,3^{n,} etc. and is not altered by the needle-felting action 10 thanks to the presence of the non-woven sub-layers 6 which, in this sense, act as a shield from the action of the needles. The arrangement of the fibres orthogonally to the planes defined by the fibre sub-layers 5 can be controlled by adjusting the operating parameters of the needle-felting process and the characteristics of the non-woven sub-layers 6 of each layer 3',3",3"',... 3ⁿ, etc. of carbon fibres and/or fibres of a carbon precursor.

Assuming that the main plane of the fibrous preform 1 is defined by a plane parallel to the layers 3',3",..,3ⁿ of carbon fibres and/or fibres of a carbon precursor, thanks to the method according to the present invention, it is then possible to distribute the fibres in a controlled manner both parallel to such main plane, through the sub-layers 5, and orthogonally thereto through the needle-felting action orienting at least one part of the fibres of the non-woven sub-layers 6 orthogonally to such plane.

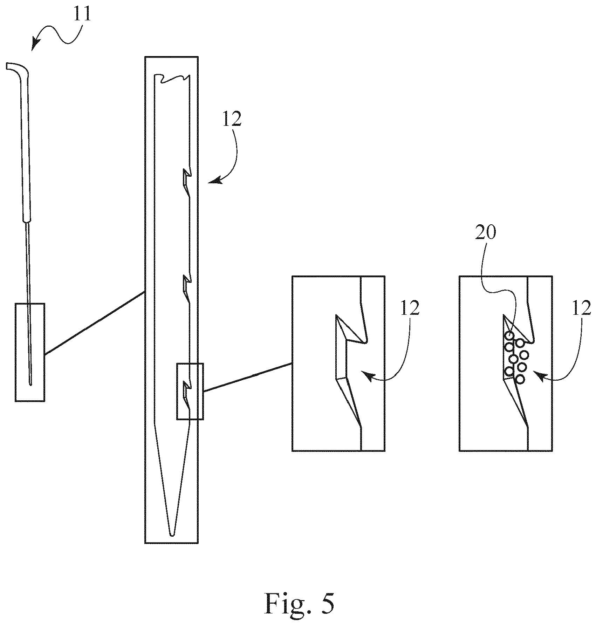

Figure 5 shows schematically a needle 11 of a needle-felting device 10.

The needles 11 of each needle-felting device are preferably all identical to each other and are each equipped with one or more recesses 12 called barbs, adapted to engage one or more fibres 20.

More in detail, the barbs 12 are shaped so as to engage and pull the fibres when the needle 11 penetrates the layer but not to engage and pull the fibres when the needle rises and exits the layer of fibres.

The shape of the barbs is specially designed to carry out this function.

The barbs are formed in the working zone of the needle, i.e. the portion of the needle that penetrates the layer of fibres and can therefore act on the fibres.

Operationally, the fibre 20, which has been displaced in the needle's descending step, remains in the position in which it was placed by the same needle and is not affected by the upward movement of the same needle.

When exiting the layer of fibres, the needle exits without dragging the fibres therewith.

Advantageously, the aforesaid needle-felting steps are performed taking into account both the number and dimension of the barbs 12 and the diameter of the fibre and the weight of the aforesaid sub-layers 6 of non-woven fibres which constitute the upper portions of the different layers 3',3",...,3ⁿ of carbon fibres and/or fibres of a carbon precursor. In other words, the aforesaid needle-felting steps c) are performed in such a way that, throughout the same needle-felting steps, the needles 11 penetrate the layers 3',3",...,3ⁿ of carbon fibres and/or fibres of a carbon precursor and the barbs are filled only with fibres belonging to the non-woven sub-layers 6.

In other words, the needle-felting steps c) are performed in such a way that the quantity of fibres available in the sub-layers 6 of non-woven fibres is not lower than (higher than or at most equal to) the quantity of fibres transferable from the needles 11 parallel to the needle-felting direction.

Advantageously, density and orientation of the fibres arranged in said one or more sub-layers 5 are chosen depending on the density and orientation of the fibres intended to be in the fibrous preform 1 on planes orthogonal to the superimposition axis Z, i.e. parallel to the main plane of the preform 1 and orthogonal to the thickness of the same preform.

Preferably, in the needle-felting steps c), the average number of fibres to be arranged parallel to the aforesaid superimposition axis Z per unit area is controlled by adjusting the needle-felting density (stitch 10 density) depending on the dimensions and number of barbs 12 of the needles 11 as well as depending on the diameter of the fibres and the area weight of the sub-layers 6 of non-woven fibres which constitute the upper portion of each layer 3',3",..,3ⁿ of carbon fibres and/or fibres of a carbon precursor.

As already mentioned, the sub-layers 6 of non-woven fibres act, as a matter of fact, as a screen and are intended to provide the fibres to be arranged along the superimposition axis Z.

Thanks to the invention, it is possible to have a preferably controlled distribution of the long fibres 21 of all the layers constituting the multilayer body 2, to the advantage of the mechanical strength homogeneity substantially across the entire height of the preform.

Several changes can be made to the embodiments described in detail, all anyhow remaining within the protection scope of the invention, as defined by the following claims.

## Claims

1. Method for making a fibrous preform (1) of carbon and/or fibres of a carbon precursor of pre-set height (N), comprising:
- a step a) of providing at least one first disk-shaped layer (3') made of carbon fibres and/or fibres of a carbon precursor comprising a plurality of long fibres (21) arranged substantially according to a first extension direction identified by an extension axis (X);
- a step b) of superimposing a second disk-shaped layer (3") of carbon fibres and/or fibres of a carbon precursor according to a pre-set superimposition axis (Z) comprising a plurality of long fibres (21) arranged substantially according to a second extension direction identified by an extension axis (Y); said superimposing step b) is implemented so that there is an angular deviation α > 0 between said second extension direction and the extension direction of the underlying layer;
- a step c) of needle-felting, by at least one needle-felting device (10), said first (3') and said second (3") superimposed layers in a needle-felting direction substantially parallel to said superimposition axis (Z) to arrange at least part of the fibres parallel to the superimposition axis (Z),
- a step d) of repeating steps b-c until a needle-punched multilayer body (2') of pre-set height (N) is formed.

2. Method for making a fibrous preform (1) of carbon and/or fibres of a carbon precursor according to claim 1, **characterised in that** said step b) is implemented so that the second layer (3") is arranged in a way that its long fibres (21) have an angular offset of at least 15° with respect to the long fibres (21) of said first layer (3').

3. Method for making a fibrous preform (1) of carbon and/or fibres of a carbon precursor according to claim 1, **characterised in that** at least said first (3') and second (3") layers of carbon fibres and/or fibres of a carbon precursor each comprise at least one first non-woven sub-layer (6) and at least one second sub-layer (5) which are coupled so that the first non-woven sub-layer (6) is superimposed to the second sub-layer (5).

4. Method for making a fibrous preform (1) of carbon and/or fibres of a carbon precursor according to claim 1, **characterised in that** said second sub-layer (5) comprises a plurality of unidirectional long fibres (21) having an extension direction identified by an extension axis.

5. Method for making a fibrous preform (1) of carbon and/or fibres of a carbon precursor according to any one of claims 1 to 4, **characterised in that** said step a) comprises a sub-step a') of depositing at least said first layer (3') on a supporting element (4) which can be translated and configured to be placed under said needle-felting device (10), the movement of said supporting element (4) to bring said first layer (3') under said needle-felting device, by identifying a feeding direction (F).

6. Method for making a fibrous preform of carbon and/or fibres of a carbon precursor according to claim 5, **characterised in that** said first layer (3') is placed on said supporting element (4) so as to have its long fibres (21) arranged orthogonally to said feeding direction (F).

7. Method for making a fibrous preform of carbon and/or fibres of a carbon precursor according to any one of preceding claims 1 to 6, **characterised in that** said first non-woven sub-layers (6) have an area weight lower than the area weight of the second sub-layers (5).

8. Method for making a fibrous preform of carbon and/or fibres of a carbon precursor according to any one of claims 1 to 7, **characterised by** comprising a step e) of determining the number n of layers of carbon fibres and/or fibres of a carbon precursor which are superimposed according to a pre-set superimposition axis (Z) so as to form a first multilayer body (2') of height N.

9. Method for making a fibrous preform (1) of carbon and/or fibres of a carbon precursor according to any one of the preceding claims, **characterised in that** at least said first (3') and second (3") layers of carbon fibres and/or fibres of a carbon precursor are made, in plan, of a single piece.

10. Fibrous preform (1) of a pre-set height (N) made of carbon and/or fibres of a carbon precursor, comprising a plurality of superimposed disk-shaped layers (3',3",....,3ⁿ) of carbon fibres and/or fibres of a carbon precursor, each layer (3',3",....,3ⁿ) comprising a plurality of long fibres (21) of carbon and/or carbon precursor which are arranged according to an extension direction, at least two layers (3',3",3‴....3ⁿ) of the same fibrous preform (1) being arranged, with respect to each other, with said long fibres (21) mutually rotated by a pre-set angle α around the aforesaid superimposition axis (Z).

11. Fibrous preform (1) according to claim 10, **characterised in that** each layer (3',3",...,3ⁿ) comprises at least one first non-woven sub-layer (6) and at least one second sub-layer (5) which are coupled so that the first non-woven sub-layer (6) is superimposed on the second sub-layer (5).

12. Fibrous preform (1) according to claim 11, **characterised in that** said second sub-layer (5) comprises a plurality of unidirectional long fibres (21) having an extension direction identified by an extension axis.

13. Fibrous preform (1) according to any one of claims 10 to 12, **characterised in that** said at least two layers (3',3",3‴....3ⁿ), of the same fibrous preform (1) are arranged with respect to each other with said long fibres (21) mutually rotated by a pre-set angle α greater than or equal to 15° around the aforesaid superimposition axis (Z).

14. Fibrous preform (1) according to any one of claims 10 to 13, **characterised in that** said at least two layers (3',3",3‴....3ⁿ) of the same fibrous preform (1) are made, in plan, of a single piece.
